# EUROPEAN PATENT SPECIFICATION

(11) **EP 1 060 219 B1**
(45) Date of publication and mention of the grant of the patent: **09.01.2002**
(21) Application number: 99902740.2
(22) Date of filing: 16.02.1999
(51) Int. Cl.: C09C 1/36, C01G 23/08

(54) **PROCESS AND FURNACE FOR THE PRODUCTION OF TiO2 PIGMENT ACCORDING TO THE SULFATE PROCESS**
VERFAHREN UND OFEN FÜR DIE HERSTELLUNG VON TiO2 PIGMENTE NACH DEM SULFATVERFAHREN
PROCEDE ET FOUR UTILES POUR LA PRODUCTION DE PIGMENTS DE TiO2 SELON LE PROCEDE AU SULFATE

(30) Priority: 17.02.1998 DE 19806474
(43) Date of publication of application: 20.12.2000
(73) Proprietor: Kerr-McGee Pigments GmbH & Co. KG, 47829 Krefeld (DE)
(72) Inventor: LAILACH, Günter, D-47799 Krefeld (DE); HOLLE, Bernd, D-47800 Krefeld (DE)
(74) Representative: McCluskie, Gail Wilson
(86) International application number: IB9900273
(87) International publication number: WO9941317

(56) References cited:
- EP-A- 0 418 632
- EP-A- 0 784 033
- GB-A- 853 959
- US-A- 4 902 485

## Description

The invention relates to a process for the production of TiO₂ pigment from titanium dioxide hydrate and a furnace for the calcining of titanium dioxide hydrate.

According to the art (Ullmanns Encyclopaedia of Technical Chemistry, 4th Edition, Vol. 18 (1979), pages 574-576), the titanium dioxide hydrate accumulating in the hydrolysis of titanyl sulfate is separated by filtration from the mother liquor, an approximately 25% metal sulfate-containing sulfuric acid. The content of coloring metal ions such as Fe, V, Cr ions is lowered to a minimum by a reducing treatment in diluted acid. After this treatment, characterized as bleaching, the titanium dioxide hydrate still contains approximately 80 kg SO₄²⁻ ions per t TiO₂ which cannot be removed by washing with water. After addition of so-called doping chemicals, different amounts of alkali hydroxide, phosphoric acid and optionally rutile nuclei for controlling the pigment quality, the titanium dioxide hydrate is calcined in a directly heated rotary kiln. Flue gas with a temperature of 1100 to 1400°C and solids are moving counter-currently through the rotary kiln. In the first section of the rotary kiln, the titanium dioxide hydrate is dried. After heating it to approximately 500°C, sulfuric acid, split off by a further temperature increase, is partially decomposed in the hot flue gas to SO₂, O₂ and H₂O. The formation of pigment particles into the modifications anatase or rutile finally occurs at 800 to 1100°C.

The rotary kilns are very large apparatuses with respect to through-put capacity, especially because in the first section, requiring approximately 50% of the furnace length, in which the drying of the titanium dioxide hydrate filter cake occurs, the introduction of heat into the product is very ineffective (Dumont, Belanger, Ind. Engn. Chem., Process Des. Dev. 17 (1978), 107-114). The filter cake falling out of the rotary kiln in the region at the feed end must be mashed and returned for filtration. The flue gas emerging from the rotary kiln at a temperature of approximately 400°C contains TiO₂ dust which is partially converted to pigment, besides SO₂ and sulfuric acid vapor which forms mist as the gas cools. This requires large-scale facilities for dust collecting and reclaiming TiO₂ dust as well as for removing the H₂SO₄₋ mist and the SO₂ (EP-A 0 320 682). The utilization of the heat energy of the flue gas is technically complicated, especially as a result of the content of sulfuric acid vapor (EP-A 476 172, EP-A 0 097 259).

The customary process for the production of titanium dioxide by calcining sulfate-containing titanium dioxide hydrate in rotary kilns is characterized by several disadvantages.
- The individual processes cannot be optimally carried out due to the coupling of filter cake drying, solid calcination with water and sulfuric acid cleavage as well as crystal growth in one aggregate.
- The rotary kiln is extremely ineffective as an apparatus for filter cake drying. In order to attain an acceptable drying rate, temperature differences in the range of 300 to 600 K must be maintained between the combustion gas and the moist solid. This causes high heat losses as a result of exhaust heat content and radiation losses.
- The high gas temperatures required in the drying zone necessitate high gas velocities in the calcining zone of the furnace. Thereby, the dried, dust-like material is partially carried off. Therefore, the capacity of a rotary kiln is limited mainly by dust discharge which is over-proportionally increased with increasing gas velocity.
- The flow of the dried solids is increasingly influenced with increasing gas velocity and shooting of the product can occur when the velocity is reduced, resulting in insufficient calcined product.
- Large specific gas volume per ton of TiO₂ produced must be treated for removing TiO₂ dust, sulfuric acid and SO₂. It is known that the performance of the calcining furnace can be increased and the specific energy consumption can be decreased by pre-drying the charge material before a calcination (DE-A 37 25 513, US-A 4 224 288, Kirk-Othmer, Encyclopaedia of Chem. Techn., 3rd Vol. 14 (1981), pages 360-364). However, the described technology cannot be applied to conventional TiO₂ calcination because the sulfuric acid vapor released in the calcining furnace would be condensed in the pre-drier. An internal sulfuric acid circulation with continually increasing amounts of acid would result thereby. A certain increase in the capacity of the facilities can be obtained according to EP-A 0 406 605 in that a portion of the titanium dioxide hydrate filter cake to be calcined is predried with separately produced H₂SO₄- free flue gas and the dried titanium dioxide hydrate is mixed with the remaining filter cake before charging in the calcining rotary kiln. Narrow limits are set thereby for the pre-drying by the required crumbly consistency of the mixture.

Therefore, the performance of a conventional rotary kiln for TiO₂ calcination with a length to diameter ratio of approximately 20:1 can only be increased within certain limits due to the already mentioned strong influence of the flow behavior of the solids and the increase of dust discharge when increasing the gas velocity.

An object of the present invention is to provide a process and a plant for the production of titanium dioxide by drying and calcining of titanium dioxide hydrate with a high feed rate and lowered costs by avoiding the disadvantages of the art.

This object was solved according to the invention in that the entire sulfate-containing titanium dioxide hydrate filter cake is dried in any suitable directly or indirectly heated drier at product temperatures up to a maximum of 400°C, preferably a maximum of 200°C, most preferably 90 to 150°C and the dried sulfate-containing titanium dioxide hydrate is calcined in a suitable rotary kiln and the exhaust is de-dusted.

The subject matter of the invention is a method for the production of titanium dioxide by dissolving titanium raw materials with sulfuric acid, producing a metal sulfate-containing titanyl sulfate solution, hydrolysing the titanyl sulfate, separating the titanium dioxide hydrate from the metal sulfate-containing sulfuric acid by filtration, optionally bleaching the titanium dioxide hydrate by reducing treatment in acidic solution and calcining the titanium dioxide hydrate optionally mixed with doping chemicals and rutile nuclei to titanium dioxide, characterized in that the sulfate-containing titanium dioxide hydrate is dried in a dryer at temperatures from 90 to 400°C, preferably 90 to 200°C, especially 90 to 150°C, and the titanium dioxide hydrate dust from the dryer exhaust is separated by filtration, the dried titanium dioxide hydrate is calcined in a directly heated rotary kiln with counter-current flowing gases and solids at temperatures in the range from 800 to 1100°C (solids temperature) and the exhaust is de-dusted and de-sulfurized.

In principal, a conventional TiO₂ calcining furnace can be used as a rotary kiln especially if the dry material is compacted. However, in this connection, the advantages of the process according to the invention can only be partially used.

Therefore, subject matter of the invention is also a calcining furnace for carrying out the process according to the invention. This calcining furnace is a rotary kiln with a length to diameter ratio in the range of 5:1 to 10:1. In addition to the ring shaped weirs at the kiln ends, further weirs are preferably installed over the length of the furnace; 1 to 5 additional weirs are particularly preferred. In order to ensure an optimal adjustment of the operating parameters with respect to the quality of the titanium dioxide and the fuel demand at different production rates, the rotary kiln is preferably equipped according to the invention with a device for changing the speed of rotation which is preferably variable in the range of 0.2 to 1 min⁻¹.

A tighter residence time spectrum of the solids in the rotary kiln results due to the additional weirs. The speed of rotation of the furnace can be relatively high without substantially shortening the product residence time. At the same time, the product surface is more frequently renewed, and as a result, the temperature difference between the combustion gas and the product can be reduced. This also leads to a more uniform product quality. Changes of the gas velocity in the furnace have a considerably smaller influence on the product residence time than is the case with conventional TiO₂ calcining furnaces.

The de-dusting of H₂SO₄ and SO₂ containing exhaust from the calcining furnace preferably occurs with electrostatic precipitators from which the separated dust is led back into the rotary kiln again either directly or after compacting with the dry material. However, in principle, a de-dusting of the calcining exhausts by filtration or wet washing is also possible before these are treated to remove H₂SO₄ and SO₂ in a conventional manner.

Preferably, the dust separated in the filter, optionally together with coarser dry material taken from the drier, is directly fed into the rotary kiln or advantageously fed into the furnace after compacting.

A considerable advantage of the process according to the invention is that the specific volume of the calcining exhausts loaded with H₂SO₄ and SO₂ is only 30 to 50 % in comparison to the art. As a result, the costs for desulphurizing the exhausts are decisively lower.

Since filter cake drying and dry material calcination can each be operated under optimized conditions, the process according to the invention leads to an energy saving of 15 to 25 % as compared to titanium dioxide production according to the art.

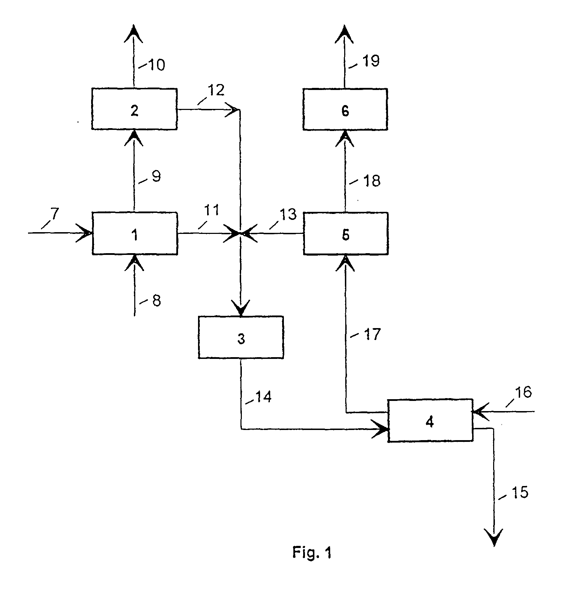

The execution of the process according to the invention in a plant according to the invention is described for a preferred embodiment via example in figure 1. Sulphate-containing titanium dioxide hydrate filter cake (7), optionally mixed with doping chemicals, is fed into a drier (1) which is directly heated with flue gas (8). The dust-containing gases (9) which leave the drier (1) at a temperature of 90 to 400°C, preferably 90 to 150°C, are de-dusted in a filter (2) and subsequently withdrawn into the atmosphere (10). The dry material (11) taken out of the drier (1) and dust (12) taken out of the filter (2) are compacted together with dust carried out of the kiln (13) in a compactor (3), for example a roller compactor. The compacted dry material (14) is fed into the rotary kiln (4) such that it is led in counter-current to the flue gas (16) created in a burner. The titanium dioxide (15) taken from the rotary kiln (4) is cooled in a customary manner, milled and optionally subjected to an additional treatment. The hot exhausts (17) containing dust, H₂SO₄ and SO₂ which leave the rotary kiln at 250 to 450°C, preferably 300 to 350°C, are preferably de-dusted in an electrostatic precipitator (5). The de-dusted exhausts (18) whose content of sulphur-containing compounds H₂SO₄ and SO₂ is two- to threefold higher than conventionally accumulating exhausts are de-sulfurized in waste-gas purification plants (6) and subsequently withdrawn into the atmosphere (19).

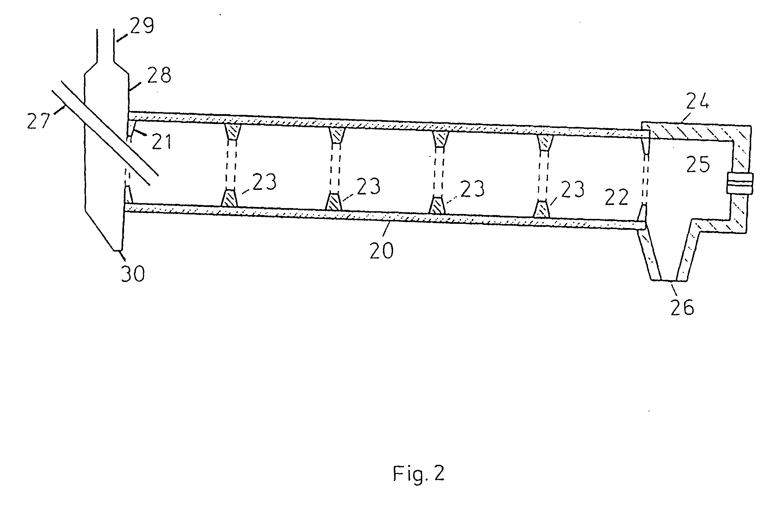

A preferred embodiment relating to a rotary kiln useful in the process of the invention is represented in figure 2. The rotary kiln (20) is characterized in that its length for a given throughput capacity is less than 50 % of those conventional rotary kilns for TiO₂ calcination.

In addition to the ring shaped weirs at the upper solid feed end of the kiln (21) and on the lower product discharge end (22), four weirs (23) for example are installed in a distributed manner over the length of the kiln. Heating occurs by means of the burner (25) installed in the combustion chamber (24). The possible introduction of secondary air into the combustion chamber is not shown. The product discharge(26) occurs at the burner side end. The dried solid containing titanium dioxide hydrate falls into the rotary kiln through the inlet pipe (27). Alternatively, the feeding of the solid can occur by means of a conveying screw or belt. The dust-containing calcining exhausts are led from the gas outlet housing (28) over the line (29) to the dust precipitator (5). Optionally, dust removed in the gas outlet housing (28) can be drawn off over the outlet (30) and added to the dried titanium dioxide hydrate (11, 12).

The advantages of the invention are illustrated by the examples without having the scope of the invention limited to them. The portions and percents given in the examples are with respect to weight in as far as nothing else is noted. The volumes given in m³ correspond to normal conditions.

### Examples

### Comparative example:

Sulphur-containing titanium dioxide hydrate mixed with doping chemicals and rutile nuclei was calcined in a conventional rotary kiln to titanium dioxide pigment clinker. The kiln had a length of 60 m, an inner diameter of 2.6 m and weirs at the inlet and outlet at a height of 0.3 m. The rotational speed was 0.15 min⁻¹. This was charged with 6.8 t/h filter cake which contained 44% as TiO₂ and 0.24 t/h SO₄²⁻. The burner was operated with 925 m³/h natural gas. A total of approximately 18,800 m³/h air was introduced (primary air to the burner + secondary air + leakage air). The temperature of the gases behind the solids outlet weir was 1,230°C corresponding to a gas velocity of 5.7 m/s (calculated for an empty kiln).

On the burner side, 3.0 t/h titanium dioxide pigment with a temperature of 980°C was discharged on average. The discharged amount, influenced by changing gas velocity due to the temperature control, varied between 2.85 and 3.1 t/h with acceptable quality fluctuations.

Approximately 25,000 m³/h moist exhaust with a temperature of 395°C which contained 4.1 g SO₂/m³, 6.7 g H₂SO₄/m³ and 4.8 g titanium-containing dust/m³ were emitted from the upper end of the furnace. That corresponds to a gas flow rate of 61,000 m³/h under operating conditions. The gas which was cooled and scrubbed dust-free in a scrubber tower and was then freed from H₂SO₄ mist in an ESP and catalytically freed from SO₂ by means of activated charcoal.

### Example

According to the invention, 17.4 t/h of the filter cake described in the comparative example were dried in a solid drier (type: stirred fluidized bed) at 125°C. The drier was operated with flue gas which was created by burning 890 m³/h natural gas with 26,500 m³/h air. Approximately 38,000 m³/h moist exhaust were emitted from the drier which was de-dusted in a filter. 9.1 t/h dried titanium dioxide hydrate dust accumulated with drying. This was compacted with a roller compactor and then fed into a rotary kiln according to the invention.

The rotary kiln had a length of 28 m and an inner diameter of 3.2 m. Aside from the 0.3 m high weirs at the kiln ends, four equally high weirs are installed evenly distributed over the length of the kiln. The rotational speed is 0.5 min⁻¹. The burner was operated with 960 m³/h natural gas. A total of approximately 17,700 m³/h of air was introduced. The temperature of the gases behind the discharge weir was 1,320°C; the gas velocity 3.3 m/s.

7.65 t/h titanium dioxide pigment with a temperature of 975°C was discharged. The product discharge and the pigment quality vary within narrower limits as with the comparative example.

A moist exhaust current of approximately 21,100 m³/h with a temperature of 310°C which contained 13.4 g SO₂, 14.8 g H₂SO₄ and 3.6 g dust per m³/h as dry gas accumulated from the rotary kiln. It was cleaned as in the comparative example.

The substantial advantages of the invention are represented by the comparison with the art:

| | **Example according to the invention** | **Comparative example according to the art** |
|---|---|---|
| rotating kiln: | | |
| length m | 28 | 60 |
| external surface area m² | 335 | 600 |
| specif. surface surface m²/t TiO₂ | 43,8 | 200 |

| Exhaust of the rotary kiln | | |
|---|---|---|
| (SO₂/H₂SO₄-containing): | | |
| temperature °C | 310 | 395 |
| spec. volume* m³/t TiO₂ | 5,880 | 20,390 |
| dust discharge % of TiO₂ prod | 0.83 | 4.18 |

| filter cake drying: Exhaust (S-free): | | |
|---|---|---|
| temperature °C | 125 | - |
| spec. volume* m³/t TiO₂ | 6,590 | - |
| Total consumption of | 242 | 308 |
| natural gas m³/t TiO₂ | | |

| | | |
|---|---|---|
| *m³ here, volume under operating conditions. | | |

## Claims

1. A process for the production of titanium dioxide by dissolving titanium raw materials with sulfuric acid, producing a metal sulfate-containing titanyl sulfate solution, hydrolyzing the titanyl sulfate, separating the titanium dioxide hydrate from the metal sulfate-containing sulfuric acid by filtration, optionally bleaching the titanium dioxide hydrate by reducing treatment in acidic solution and calcining the titanium dioxide hydrate optionally mixed with doping chemicals and rutile nuclei to titanium dioxide, **characterized in that** the sulfate-containing titanium dioxide hydrate is dried in a dryer at temperatures from 90 to 400°C, preferably 90 to 200°C, especially 90 to 150°C, and the titanium dioxide hydrate dust from the dryer exhaust is separated by filtration, the dried titanium dioxide hydrate is calcined in a directly heated rotary kiln with counter-current flow of solids and gases at temperatures in the range from 800 to 1100°C (solids temperature) and the exhaust is de-dusted and de-sulfurized.

2. Process according to claim 1, **characterized in that** the dried titanium dioxide hydrate is compacted and subsequently calcined.

3. Process according to claim 1, **characterized in that** the gases containing dust, H₂SO₄ and SO₂ which are emitted from the rotary kiln at a temperature of 250 to 450°C, preferably 300 to 350°C, are de-dusted and de-sulphurized independently from the exhausts of the titanium dioxide hydrate dryer.

4. Process according to claim 1, **characterized in that** the exhausts from the calcining furnace are de-dusted in an electrostatic precipitator or a dust filter and the separated dust is introduced into the calcining furnace together with the dried titanium dioxide hydrate, optionally after a compacting step.

5. Process according to claim 1, **characterised in that** the rotary kiln used for calcining the dried titanium dioxide hydrate has a length-diameter ratio in the range of from 5 to 10.

6. Process according to claim 5, **characterised in that** the rotary kiln has ring-shaped weirs at the kiln ends and has additional weirs installed in the rotary kiln distributed over the length of the furnace

7. Process according to claim 5, **characterised in that** from 1 to 5 additional ring-shaped weirs are installed in the rotary kiln.

8. Process according to claim 5, **characterised in that** the rotary kiln is equipped with a device for altering the speed of rotation.

## Patentansprüche

1. Verfahren zur Herstellung von Titandioxid durch Auflösen von Titanrohstoffen mit Schwefelsäure, Herstellen einer Metallsulfat-haltigen Titanylsulfatlösung, Hydrolysieren des Titanylsulfats, Abtrennen des Titandioxidhydrats von der Metallsulfat-haltigen Schwefelsäure durch Filtration, wahlweises Bleichen des Titandioxidhydrats durch reduzierende Behandlung in saurer Lösung und Kalzinieren des Titandioxidhydrats, das wahlweise mit Dotierchemikalien und Rutilkernen gemischt wird, zu Titandioxid,
**dadurch gekennzeichnet,**
**daß** das Sulfat-haltige Titaniumdioxidhydrat in einem Trockner bei Temperaturen von 90 bis 400°C, bevorzugt von 90 bis 200°C, insbesondere von 90 bis 150°C, getrocknet wird und der Titandioxidhydratstaub von dem Trocknerabgas mittels Filtration abgetrennt wird, das getrocknete Titandioxidhydrat in einem direkt beheizten Drehofen mit Gegenstromfluß von Feststoffen und Gasen bei Temperaturen im Bereich von 800 bis 1100°C (Feststofftemperatur) kalziniert wird und das Abgas entstaubt und entschwefelt wird.

2. Verfahren gemäß Anspruch 1,
**dadurch gekennzeichnet,**
**daß** das getrocknete Titandioxidhydrat kompaktiert und nachfolgend kalziniert wird.

3. Verfahren gemäß Anspruch 1,
**dadurch gekennzeichnet,**
**daß** die Gase, die Staub, H₂SO₄, und SO₂ enthalten, welche von dem Drehofen bei Temperaturen von 250 bis 450°C, bevorzugt 300 bis 350°C, abgegeben werden, unabhängig von den Abgasen des Titandioxidhydrattrockners entstaubt und entschwefelt werden.

4. Verfahren gemäß Anspruch 1,
**dadurch gekennzeichnet,**
**daß** die Abgase aus dem Kalzinierofen in einem elektrostatischen Abscheider oder einem Staubfilter entstaubt werden und der abgetrennte Staub in den Kalzinierofen zusammen mit dem getrockneten Titandioxidhydrat, wahlweise nach einem Kompaktierschritt, eingebracht wird.

5. Verfahren gemäß Anspruch 1,
**dadurch gekennzeichnet,**
**daß** der Drehofen, der für das Kalzinieren des getrockneten Titandioxidhydrats verwendet wird, ein Längen-Durchmesser-Verhältnis im Bereich 5 bis 10 aufweist.

6. Verfahren gemäß Anspruch 5,
**dadurch gekennzeichnet,**
**daß** der Drehofen ringförmige Wehre an den Ofenenden und weitere Wehre, die in dem Drehofen über die Länge des Ofens verteilt angeordnet sind, aufweist.

7. Verfahren gemäß Anspruch 5,
**dadurch gekennzeichnet,**
**daß** 1 bis 5 zusätzliche ringförmige Wehre im Drehofen angeordnet sind.

8. Verfahren gemäß Anspruch 5,
**dadurch gekennzeichnet,**
**daß** der Drehofen mit einer Vorrichtung zum Ändern der Drehgeschwindigkeit ausgerüstet ist.

## Revendications

1. Procédé de production de dioxyde de titane par dissolution de matières premières à base de titane à l'aide d'acide sulfurique, par production d'une solution de sulfate de métal contenant du sulfate de titanyle, par hydrolyse du sulfate de titanyle, par séparation par filtration du dioxyde de titane hydraté du sulfate de métal contenant de l'acide sulfurique, par décoloration éventuelle du dioxyde de titane hydraté par traitement réducteur en solution acide et par calcination du dioxyde de titane hydraté, éventuellement en mélange avec des produits chimiques dopants et des noyaux de rutile, en dioxyde de titane, **caractérisé par le fait que** le dioxyde de titane hydraté contenant du sulfate est séché dans un dessiccateur à des températures comprises entre 90 et 400°C, de préférence entre 90 et 200°C, en particulier entre 90 et 150°C, et que la poussière de dioxyde de titane hydraté évacuée du dessiccateur est séparée par filtration, le dioxyde de titane hydraté séché est calciné dans un four rotatif à chauffage direct avec un flux à contre-courant de produits solides et gazeux à des températures comprises dans la gamme de 800 à 1100°C (températures des substances solides), et que le produit d'évacuation est dépoussiéré et désulfurisé.

2. Procédé selon la revendication 1, **caractérisé par le fait que** le dioxyde de titane hydraté séché est compacté et ensuite, calciné.

3. Procédé selon la revendication 1, **caractérisé par le fait que** les gaz contenant de la poussière, H₂SO₄ et SO₂, qui sont émis par le four rotatif à une température de 250 à 450°C, de préférence de 300 à 350°C, sont dépoussiérés et désulfurisés indépendamment des produits d'évacuation du dessiccateur de dioxyde de titane hydraté.

4. Procédé selon la revendication 1, **caractérisé par le fait que** les produits d'évacuation du four de calcination sont dépoussiérés dans un dispositif de précipitation électrostatique ou un filtre à poussière et que la poussière séparée est introduite dans le four de calcination conjointement avec le dioxyde de titane hydraté séché, éventuellement après une étape de compactage.

5. Procédé selon la revendication 1, **caractérisé par le fait que** le four rotatif utilisé pour la calcination du dioxyde de titane hydraté séché présente un rapport de la longueur au diamètre de l'ordre de 5 à 10.

6. Procédé selon la revendication 5, **caractérisé par le fait que** le four rotatif comporte des cloisons de forme annulaire aux extrémités du four et des cloisons supplémentaires installées dans le four rotatif et réparties sur toute la longueur du four.

7. Procédé selon la revendication 5, **caractérisé par le fait que** 1 à 5 cloisons supplémentaires de forme annulaire sont installées dans le four rotatif.

8. Procédé selon la revendication 5, **caractérisé par le fait que** le four rotatif est muni d'un dispositif destiné à modifier la vitesse de rotation.
